(19)

Europäisches Patentamt
European Patent Office
Office européen des brevets

(11) **EP 1 679 969 B1**

(12) **EUROPEAN PATENT SPECIFICATION**

(45) Date of publication and mention of the grant of the patent:
**18.03.2009 Bulletin 2009/12**

(21) Application number: **04798416.6**

(22) Date of filing: **05.11.2004**

(51) Int Cl.:
*A01N 53/00* (2006.01)

(86) International application number:
**PCT/GB2004/004692**

(87) International publication number:
**WO 2005/046332 (26.05.2005 Gazette 2005/21)**

(54) **PRODUCT AND METHOD FOR CONTROLLING FLYING INSECTS**

PRODUKT UND VERFAHREN ZUR BEKÄMPFUNG VON FLIEGENDEN INSEKTEN

PRODUIT ET PROCEDE DE LUTTE CONTRE LES INSECTES VOLANTS

(84) Designated Contracting States:
**AT BE BG CH CY CZ DE DK EE ES FI FR GB GR HU IE IS IT LI LU MC NL PL PT RO SE SI SK TR**

(30) Priority: **07.11.2003 GB 0326053**

(43) Date of publication of application:
**19.07.2006 Bulletin 2006/29**

(73) Proprietor: **Reckitt Benckiser (Australia) Pty Limited**
**West Ryde, NSW 2114 (AU)**

(72) Inventors:
• **BALAKRISHNAN, Krishanthi**
 **West Ryde,**
 **New South wales 2114 (AU)**
• **BOWMAN, Gary**
 **West Ryde,**
 **New South Wales 2114 (AU)**
• **JUNUS, Rosita**
 **West Ryde,**
 **New South Wales 2114 (AU)**

• **KEMMIS, Bruce, Graham**
 **Thornleigh,**
 **New South Wales 2120 (AU)**
• **RIDLEY, Philip, Stephen**
 **Glenbrook, New South Wales 2773 (AU)**
• **THOMPSON, Ian**
 **West Ryde,**
 **New South Wales 2114 (AU)**

(74) Representative: **Cawdell, Karen Teresa et al**
**Reckitt Benckiser**
**Corporate Services Limited**
**Legal Department - Patents Group**
**Dansom Lane**
**Hull**
**HU8 7DS (GB)**

(56) References cited:
**EP-A- 0 792 581      EP-A- 0 962 139**
**EP-A- 1 216 615      FR-A- 2 639 187**
**FR-A- 2 767 028      FR-A- 2 785 147**

**Description**

**Technical Field**

The present invention relates generally to flying insect control and more particularly to a cellulosic based substrate or matrix containing a vapour active pyrethroid that is effective in controlling flying insects, particularly mosquitoes.

**Background Art**

The control of flying insects in an indoor or an outdoor area has traditionally been achieved using articles or devices that dispense insecticide vapours into the atmosphere. Such articles or devices generally burn or heat a liquid or solid substrate to vaporise the active ingredient. For instance, in controlling mosquitoes, coils impregnated with an active ingredient are burnt so that heat from combustion causes the release of the active ingredient into the atmosphere, citronella oil candles are burnt so as to heat the citronella oil and allow it to evaporate into the atmosphere, while electric devices electrically heat the active ingredient so that it vaporises and is dispersed into the atmosphere. Battery operated, fan driven products are also used to control mosquitoes. The above mentioned products require an energy source in the form of combustion, heat or electricity. The release rates of active insecticides from continuous action products such as mosquito coils, candles, liquid vaporisers and electrically heated mats are essentially independent of the surrounding environment, the driving force for discharge of the active being supplied from within the system.
The abovementioned articles and devices used to control mosquitoes have disadvantages. The combustion of mosquito coils requires a safe burning site and results in ash and smoke. The burning of a candle exposes a naked flame and therefore also requires a safe burning site. The use of electricity to heat an insecticidal device is costly in some developing countries and is not portable.
There also exists ambient temperature moth repellent products that rely on passive evaporation of the insecticide from a substrate into the environment. These products, which have commonly been used to control moths, do not require an external source of energy, such as combustion, heat or electricity to release the insecticide into the atmosphere. Instead, an insecticide that vapourises at ambient temperature is required for these products. The concept of an ambient temperature moth repellent has many benefits: they provide long lasting and continuous protection; they are efficient in that there is no need for a means of heating; and they are portable, modern and practical.
The above known ambient temperature products, however, also have disadvantages. Firstly, many of the prior art products are only effective in small, enclosed spaces and/or require significant air movement for the insecticide to be effective in a larger area of space. Secondly, the inventors are not aware of any cost-effective ambient emanation products that are able to work efficiently using low doses of insecticide for the control of insects other than moths, such as mosquitoes.
There is clearly a need for insecticidal products, particularly cost effective products, that do not require an external input of energy for them to be effective in controlling flying insects, particularly mosquitoes.
Whilst recognising the short comings of prior art articles for controlling mosquitoes and moths, the present inventors have sought to provide an improved vapour active insecticide product with high insecticidal potency in the continuous control of flying insects without the need for electricity, heat or combustion.
EP 0792581 describes an insect controller that does not require heating. It exemplifies controllers comprising insecticides dissolved in acetone.
FR 2639187 discloses the method for controlling insects using a solution of a pyrethroid. Example 5 discloses a solution including polyethylene glycol dissolved in a sufficient quantity of acetone.
FR 2767028 discloses a device for controlling insects comprising the solution of a volatile pyrethroid wherein the cell can be ethanol or acetone.
FR 2785147 discloses paper or cellulose-containing substrates for insect control impregnated with solutions of volatile pyrethroids. It exemplifies solutions containing transfluthrin.
EP 1216615 discloses insect control articles containing pyrethroids. It describes spraying substrates with an aerosol formulation of Esbiol.
EP 0962139 discloses a pest control article comprising a wind generating mechanism for evaporating an active agent. It exemplifies an article wherein the active agent is dissolved in acetone.

**Disclosure of the Invention**

The present inventors have found an effective way of controlling flying insects, in particular mosquitoes, using a combination of substrate, vapour active pyrethroid and carrier solvent that allows emanation of the pyrethroid from the substrate at dose levels that achieve an effective emanation rate and are cost effective.

According to an aspect of the present invention, there is provided a cellulosic based substrate or matrix for controlling flying insects, the cellulosic based substrate or matrix impregnated and/or dosed with an insecticidally effective amount of a vapour active pyrethroid in a carrier solvent or combination of carrier solvents, wherein the carrier solvent(s) has an evaporation rate according to ASTM D3539-87 of less than 1.0; wherein the carrier solvent(s) is/are selected from carrier solvents having a boiling point in the range 50°C to 265°C, normal paraffins with a boiling point range of 155°C to 276°C, dearomatised aliphatic hydrocarbons and their blends in the boiling point range of 33°C to 265°C, and/or isoparaffins in the boiling point range of 150°C to 300°C; and the carrier solvent(s) has a Snyder polarity index in the range of 0.0-4.0, such that the vapour active pyrethroid is emanated into the environment at a rate of at least 0.040 mg/h.

Preferably, the vapour active pyrethroid is selected from the group consisting of metofluthrin, transfluthrin, empenthrin, methothrin, tefluthrin, and fenfluthrin or mixtures thereof, most preferably the pyrethroid is metofluthrin.

Preferably, the cellulosic based substrate or matrix has a surface area in the range of 50-5000 cm$^2$ and the vapour active pyrethroid is present in an amount of 2.0-3000 mg/m$^2$.

Preferably, the solvent is selected from the group consisting of normal paraffins with a boiling point range of 155-276°C, dearomatised aliphatic hydrocarbons and their blends in the boiling point range of 150-265°C isoparaffins in the boiling point range of 150-300°C and glycol ethers in the boiling point range of 120-243°C.

Preferably, the carrier solvent has a boiling point in the range of 150-265°C.

Preferably, the vapour active pyrethroid is metofluthrin.

Preferably, the cellulosic based substrate or matrix is impregnated and/or dosed with a vapour active pyrethroid in an amount of 16-320 mg/m$^2$, preferably 130-320 mg/m$^2$, of the substrate or matrix surface area.

Preferably, the cellulosic based substrate or matrix is impregnated and/or dosed with a vapour active pyrethroid in an amount of 48-960 mg/m$^2$, preferably 390-960 mg/m$^2$, of the substrate or matrix surface area.

Preferably, the cellulosic based substrate or matrix is impregnated and/or dosed with a vapour active pyrethroid in an amount of 144-2880 mg/m$^2$, preferably 1770-2880 mg/m$^2$, of the substrate or matrix surface area.

Preferably, the vapour active pyrethroid is emanated into the environment with non-augmented air movement at a rate of at least 0.040 mg/h at a temperature in the range of 18-40°C.

Preferably, the vapour active pyrethroid is emanated into the environment at a temperature in the range of 21-40°C.

Preferably, the vapour active pyrethroid is emanated into the environment at a rate of at least 0.075 mg/h, preferably at a temperature in the range of 21-35°C.

Preferably, the cellulosic based substrate or matrix has a grammage in the range of 12 gsm to less than 260 gsm, 18 gsm to 40 gsm, or 18 gsm.

Preferably, the cellulosic based substrate or matrix is in the form of a honeycomb arrangement.

Preferably, the honeycomb arrangement has two ends that are attached to a protective material into which the vapour active pyrethroid cannot migrate and/or be absorbed.

Preferably, the honeycomb arrangement has an open form that allows emanation of the vapour active pyrethroid into the atmosphere and a closed form which inhibits migration and/or absorption of the vapour active pyrethroid into the atmosphere.

Preferably, the flying insects are controlled by knockdown.

Preferably, the flying insects are mosquitoes.

Preferably the carrier solvent has a Snyder polarity index of less than 4.0 and preferably less than 0.5.

According to a preferred embodiment, there is provided a cellulosic based substrate or matrix impregnated and/or dosed with a vapour active pyrethroid in a carrier solvent; wherein the cellulosic based substrate or matrix has a surface area in the range of 50-5000 cm$^2$, the vapour active pyrethroid is selected from the group consisting of metofluthrin, transfluthrin, empenthrin, methothrin, tefluthrin, and fenfluthrin or mixtures thereof and is present in an amount of 2.0-3000 mg/m$^2$; and wherein the carrier solvent has an evaporation rate according to ASTM D3539-87 of less than 1.0; wherein the carrier solvent is selected from carrier solvents having a boiling point in the range 50°C to 265°C, normal paraffins with a boiling point range of 155°C to 276°C, dearomatised aliphatic hydrocarbons and their blends in the boiling point range of 33°C to 265°C, and/or isoparaffins in the boiling point range of 150°C to 300°C; and the carrier solvent(s) has a Snyder polarity index in the range of 0.0-4.0; such that the vapour active pyrethroid is emanated into the environment with non-augmented air movement at a rate of at least 0.040 mg/h at a temperature in the range of 18-40°C.

In a further aspect there is provided a flying insect control article comprising a cellulosic based substrate or matrix of the present invention.

There is therefore provided a flying insect control article comprising a cellulosic based substrate or matrix for controlling flying insects, the cellulosic based substrate or matrix impregnated and/or dosed with an insecticidally effective amount of a vapour active pyrethroid in a carrier solvent or combination of carrier solvents, wherein the carrier solvent (s) has an evaporation rate according to ASTM D3539-87 of less than 1.0;
wherein the carrier solvent(s) is/are selected from carrier solvents having a boiling point in the range 50°C to 265°C, normal paraffins with a boiling point range of 155°C to 276°C, dearomatised aliphatic hydrocarbons and their blends in the boiling point range of 33°C to 265°C, and/or isoparaffins in the boiling point range of 150°C to 300°C;
and the carrier solvent(s) has a Snyder polarity index in the range of 0.0-4.0, such that the vapour active pyrethroid is emanated into the environment at a rate of at least 0.040 mg/h.

In yet a further aspect, the flying insect control article further comprising:

a protective material that is attached to the cellulosic based substrate or matrix into which protective material the vapour active pyrethroid does not migrate and/or is not absorbed;
wherein the cellulosic based substrate and/or matrix exists in a closed and open form such that when in the open form the pyrethroid is able to emanate from the substrate into the environment and when in the closed form the protective material covers the substrate or matrix to minimise emanation of the pyrethroid into the environment.

In a yet further aspect, the flying insect control article is packaged and comprises:

a packaging material enclosing the cellulosic based substrate or matrix into which material the vapour active pyrethroid does not migrate and/or is not absorbed;
wherein when the packaging material enclosing the cellulosic based substrate or matrix is removed from around the cellulosic based substrate or matrix, the vapour active pyrethroid is free to emanate from the cellulosic based substrate or matrix exposed to the environment to control flying insects.

In a yet further aspect, the flying insect control article is a stable flying insect control article and is enclosed by a packaging material;
wherein the cellulosic based substrate or matrix is wet with a solution of the insecticidally effective amount of the vapour active pyrethroid and the vapour active pyrethroid emanates from the cellulosic substrate or matrix into the environment at a rate of at least 0.040 mg/h but does not migrate and/or is not absorbed into the packaging material.

Preferably, the cellulosic based substrate or matrix is a paper substrate with a grammage of 18 gsm.

Preferably, the protective material and packaging material is selected from the group including metalised polyester, heat sealed polyester films, polyester based film and formed sheet, acrylonitrile-methyl acrylate copolymers and laminates thereof, metal foil and laminates thereof, or is glass.

In a yet further aspect there is provided a method for controlling flying insects comprising the steps of:

a) providing the cellulosic based substrate or matrix according to the present invention or the flying insect control article according to the present invention;
b) exposing the cellulosic based substrate or matrix in an environment with non-augmented air movement; and
c) allowing the vapour active pyrethroid impregnated within and/or dosed on the cellulosic based substrate or matrix to passively emanate into the air.

There is therefore provided a method for controlling flying insects comprising the steps of:

a) providing a cellulosic based substrate or matrix for controlling flying insects, the cellulosic based substrate or matrix impregnated and/or dosed with an insecticidally effective amount of a vapour active pyrethroid in a carrier solvent or combination of carrier solvents, wherein the carrier solvent(s) has an evaporation rate according to ASTM D3539-87 of less than 1.0;
wherein the carrier solvent(s) is/are selected from carrier solvents having a boiling point in the range 50°C to 265°C, normal paraffins with a boiling point range of 155°C to 276°C, dearomatised aliphatic hydrocarbons and their blends in the boiling point range of 33°C to 265°C, and/or isoparaffins in the boiling point range of 150°C to 300°C;
and the carrier solvent(s) has a Snyder polarity index in the range of 0.0-4.0, such that the vapour active pyrethroid is emanated into the environment at a rate of at least 0.040 mg/h; or a flying insect control article, comprising the cellulosic based substrate or matrix;
b) exposing the cellulosic based substrate or matrix in an environment with non-augmented air movement; and
c) allowing the vapour active pyrethroid impregnated within and/or dosed on the cellulosic based substrate or matrix to passively emanate into the air.

In yet a further aspect there is provided a method of packaging a cellulosic based substrate or matrix according to the present invention or the flying insect control article according to the present invention comprising the steps of:

a) providing a packaging material through which the vapour active pyrethroid does not migrate and/or is not absorbed;

b) forming a pouch with the packaging material;

c) filling the pouch with the cellulosic based substrate or matrix or insect control article; and

d) sealing the pouch.

There is therefore provided a method of packaging a cellulosic based substrate or matrix for controlling flying insects, the cellulosic based substrate or matrix impregnated and/or dosed with an insecticidally effective amount of a vapour active pyrethroid in a carrier solvent or combination of carrier solvents, wherein the carrier solvent(s) has an evaporation rate according to ASTM D3539-87 of less than 1.0; wherein the carrier solvent(s) is/are selected from carrier solvents having a boiling point in the range 50°C to 265°C, normal paraffins with a boiling point range of 155°C to 276°C, dearomatised aliphatic hydrocarbons and their blends in the boiling point range of 33°C to 265°C, and/or isoparaffins in the boiling point range of 150°C to 300°C; and the carrier solvent(s) has a Snyder polarity index in the range of 0.0-4.0, such that the vapour active pyrethroid is emanated into the environment at a rate of at least 0.040 mg/h, or a flying insect control article comprising the cellulosic based substrate or matrix, comprising the steps of:

a) providing a packaging material through which the vapour active pyrethroid does not migrate and/or is not absorbed forming a pouch with the packaging material;

b) filling the pouch with the cellulosic based substrate or matrix or insect control article; and

c) sealing the pouch.

Preferably, the packaging material is selected from the group consisting of metalised polyester, heat sealed polyester films, polyester based film and formed sheet and acrylonitrile-methyl acrylate copolymers and laminates thereof, metal foil and laminates thereof and glass.

The cellulosic based substrate or matrix may be any substrate matrix that contains cellulosic fibres and includes but is not limited to ground wood pulp, chemical wood pulp, straw preferably wheat straw, bagasse (residue from crushed sugarcane), esparto grass, bamboo, flax, hemp, jute and kenafrag fibres (cotton), cotton linters and recycled wastepaper in the form of, for instance, tissue, paper and cardboard. The cellulosic based substrate or matrix may be of varying grade and includes but is not limited to bleached, recycled and virgin cellulosic based substrates or matrices. It will be appreciated that different types of cellulosic based substrates or matrices will affect the emanation rate of the vapour active pyrethroid from the substrate or matrix into the atmosphere. Preferably, the cellulosic based substrate or matrix is paper, more preferably, bleached paper.

It will be understood that a "substrate" is something which underlies or serves as a basis or foundation and a "matrix" is something which gives origin or form to a thing or which serves to enclose it. Accordingly, it will be appreciated that the term "substrate" is more applicable to flat cellulose based articles while the term "matrix" is more applicable to three-dimensional cellulose based articles.

Preferably, the cellulosic based substrate or matrix according to the invention has a grammage in the range of 12 gsm to less than 260 gsm, more preferably in the range of 12 gsm to 150 gsm, even more preferably in the range of 12 gsm to 40 gsm. Most preferably, the cellulosic based substrate or matrix has a grammage of 18 gsm.

According to the present invention, the cellulosic based substrate or matrix is impregnated and/or dosed with a vapour active pyrethroid. The substrate or matrix is deemed "impregnated" with the vapour active pyrethroid when the pyrethroid is either partially or completely distributed within the material of the substrate or matrix in such a manner that the pyrethroid fills all or some of the interstices of the material of the substrate or matrix and is directly held within the substrate or matrix and supported thereby. The substrate is deemed to be "dosed" with the vapour active pyrethroid when a specific quantity of the pyrethroid is applied to the substrate or matrix and absorbed either partially or completely into the pores of the substrate or matrix.

The cellulosic based substrate or matrix according to the invention is impregnated and/or dosed with a vapour active pyrethroid, preferably in an amount of 2.0-3000 mg/m$^2$, more preferably, 2.0-1000 mg/m$^2$. The vapour active pyrethroid is present in an amount that is insecticidally effective upon emanation into the environment. It will be appreciated that the amount of vapour active pyrethroid required per square meter will depend on the period of time the vapour active pyrethroid is required to emanate from the cellulose based substrate or matrix. For instance, for a cellulosic based substrate required to be effective in controlling insects, such as mosquitoes, over a 100 hour period, it is preferred that the cellulosic substrate or matrix be impregnated and/or dosed with vapour active pyrethroid in an amount of 16-320 mg/m$^2$, more preferably 130-320 mg/m$^2$. Over a 300 hour period; it is preferred that the cellulosic substrate or matrix be impregnated and/or dosed with vapour active pyrethroid in an amount of 48-960 mg/m$^2$, more preferably 390-960 mg/m$^2$. Over a 900 hour period, it is preferred that the cellulosic substrate or matrix be impregnated and/or dosed with vapour active pyrethroid in an amount of 144-2880 mg/m$^2$, more preferably, 1170-2880 mg/m$^2$.

Preferably, the cellulosic based substrate or matrix according to the various aspects of the invention has a surface area of about 50-5000 cm$^2$, more preferably, 180-2400 cm$^2$.

In a preferred embodiment, a surface area of cellulosic based substrate or matrix in the range of 1250-2400 cm$^2$ is impregnated with 20-40 mg of vapour active pyrethroid to achieve 100 hours of use, or 60-120 mg of vapour active pyrethroid to achieve 300 hours of use, or 180-360 mg of vapour active pyrethroid to achieve 900 hours of use.

The phrase surface area" is intended to mean the total geometric or two dimensional surface area of the cellulosic based substrate or matrix that is exposed to the atmosphere or environment into which the vapour active pyrethroid is to emanate. It will be understood that where the cellulosic based substrate or matrix is a flat piece of paper, the surface area is the sum of the area of both sides of the paper. It will further be understood that the surface area of any other configuration will be the sum of the area of the surfaces exposed to the atmosphere/environment. Generally, the inventors have found that an increase in the surface area increases the emanation rate of the vapour active pyrethroid from the cellulosic based substrate or matrix into the atmosphere.

It will be understood that vapour active pyrethroids are those that are volatile at ambient temperature without heat or combustion. The vapour active pyrethroids are preferably selected from the group consisting of metofluthrin (1.4x10-5mmHg/ 25°C), transfluthrin (2.6x10-5mmHg/25°C, 4.0x10-1mPa/20°C), empenthrin (14mPa/23.6°C), methothrin, tefluthrin (8.4mPa/20°C, 50mPa/40°C), and fenfluthrin (1mPa/20°C). It will be appreciated that one or more vapour active pyrethroids may be employed in the present invention. Preferably, the vapour active pyrethroid is metofluthrin. Metofluthrin has high potency against mosquitoes, flies, and moths. The chemical name of metofluthrin is 2,3,5,6-tetrafluro-4-(methoxymethyl)benzyl-(EZ)-(1RS,3RS;1RS,3SR)-2,2-dimethyl-3-(prop-1-enyl)cyclopropanecarboxylate. Metofluthrin is available from Sumitomo Chemical Company.

The emanation or release of the vapour active pyrethroid from the cellulosic based substrate or matrix into the atmosphere/environment may be referred to as the emanation rate or release rate and will be understood to mean the depletion of an amount of vapour active pyrethroid from the cellulosic based substrate or matrix over a certain period of time and has a unit of measurement of mg/hour. The emanation rate is a measure of efficacy in controlling flying insects. The inventors have found that the emanation rate is affected by the surface area of the cellulose based substrate or matrix and the amount of the vapour active pyrethroid impregnated and/or dosed onto the substrate or matrix.

The present inventors have found that emanation of a vapour active pyrethroid, preferably metofluthrin, from a cellulosic based substrate or matrix into the atmosphere at a rate of at least 0.040 mg/h, more preferably at least 0.075 mg/h, is required to effectively control flying insects, particularly mosquitoes and moths. The present inventors believe that a lower emanation rate of at least 0.040 mg/h may be more effective in controlling flying insects such as moths, while a higher emanation rate of at least 0.075 mg/h may be more effective in controlling insects such as mosquitoes. Throughout the specification, the emanation rate of 0.040 mg/h may be referred to as the minimum effective emanation rate (MEER). This MEER may be achieved by controlling a variety of parameters including but not limited to the quantity of vapour active insecticide impregnated and/or dosed onto the cellulosic based substrate or matrix; the size, mass and folding of the cellulosic based substrate or matrix; temperature; and air flow.

By virtue of extrapolation, the present inventors expect the emanation rate of vapour active pyrethroid from the cellulosic substrate or matrix of at least 0.040 mg/h, preferably 0.075 mg/h, to be effective in controlling flying insects, particularly mosquitoes, at a temperature in the range of 18-40°C. The possibility of achieving emanation of the vapour active pyrethroid from the cellulosic substrate or matrix according to the present invention at low temperatures in the range of 18-21°C contributes to the commercially viability of the various aspects of the invention.

Preferably, the vapour active pyrethroid is emanated from the cellulosic matrix or substrate at a rate of at least 0.04 mg/h, preferably at least 0.075 mg/h, at a temperature in the range of 18-40°C, more preferably 21-35°C.

It will be understood that an environment with non-augmented air movement refers to natural air movement that passes over and/or through the cellulosic based substrate or matrix, thereby allowing the vapour active insecticide to passively emanate into the atmosphere. It excludes the use of fans, heat and other mechanical means of increasing air movement. Suitable environments include but are not limited to enclosed rooms and open volumes of space, such as patios and the like, with air movement provided by natural air movement.

The cellulosic based substrate/matrix and the insect control devices of the present invention are used to control flying insects. The flying insects may be selected from but not limited to biting Dipterous pests (Order Diptera) such as mosquitoes (Family Culicidea), biting midges (Family Ceratopogonidae), black flies (F. Simulidae), sandflies (certain Psychodidae) and biting flies (various families eg Muscidae and Tabanidae) and non-biting Dipterous insects (e.g. flies and midges of various families including, but not limited to Muscidae, Calliphoridae, Drosophilidae, Chironomidae and Psychodidae) and certain moths (Order Lepidoptera). Preferably, the cellulosic based substrate/matrix and the insect control devices of the present invention are used to control mosquitoes.

It will be understood that "control" of the flying insect population includes but is not limited to any one of or a combination of killing, repelling or knocking down a flying insect. It will be appreciated that a typical way of measuring the performance of an insecticide is in the form of "knockdown".

Throughout the specification, the term "passive emanation" is used to describe the process by which the vapour active pyrethroid emanates from the cellulosic based substrate or matrix into the atmosphere without the application of external energy.

According to the invention, the cellulosic based substrate or matrix is impregnated and/or dosed with the vapour active pyrethroid, preferably metofluthrin, in a carrier solvent. The carrier solvent may be any solvent or combination of solvents in which the vapour active pyrethroid is soluble.

The inventors have identified three important physical properties of solvents that may be used to characterise and classify preferred carrier solvents. The first is the boiling point, the second is the evaporation rate according to the ASTM D3539-87 and the third is the polarity of the solvent as determined by the Snyder polarity index. (L.R.Snyder, J Chromatographic Science, 1978, 16, 223).

Preferably, the carrier solvent has a boiling point in the range between 50-265°C.

The carrier solvent may be selected from, normal paraffins with a boiling point range of 155-276°C (e.g. Norpar 12); dearomatised aliphatic hydrocarbons and their blends in the boiling point range of 33-265°C (e.g. pentane, heptane, hexane, Exxsol D40, Exxsol D80 and Exxsol D100); isoparaffins in the boiling point range of 150-300°C (e.g. Isopar G, and Isopar M); glycol ethers in the boiling point range of 120-243°C; natural or synthetically derived aroma chemicals, preferably in the boiling point range of 120-250°C (e.g. monoterpenes and sesquiterpenes, including monoterpene and sesquiterpene alcohols, aldehydes, ketones, esters, oxides and hydrocarbons such as linalool, geraniol, citronellal, citral, geranial, menthone, linalyl acetate, bornyl acetate, 1,8-cineole and limonene); and essential oils.

The inventors have found that the use of low boiling point solvents with high evaporation rates, as defined below by dry dosing, will be effective as carrier solvents. The inventors have also found that the use of higher boiling point solvents with lower evaporation rates, as defined below by wet dosing, leads to a preferred embodiment of the invention. In addition, the inventors of the present invention have surprisingly found that when wet dosing is employed and a solvent with a Snyder polarity index of less than approximately 4.0, preferably less than approximately 0.5, is chosen the release rates for the vapour active pyrethroid from the cellulosic based substrate are increased.

The cellulosic based substrate or matrix is impregnated and/or dosed with the vapour active pyrethroid, preferably metofluthrin, by way of dry or wet dosing.

By wet dosing, it is meant that the vapour active pyrethroid is applied to and carried within the cellulosic based substrate or matrix in the presence of a carrier solvent. The vapour active pyrethroid, preferably metofluthrin, is dissolved in the carrier solvent and the resulting solution is applied to the cellulosic based substrate or matrix such that the vapour active pyrethroid is distributed, preferably evenly, throughout the cellulosic based substrate or matrix. The carrier solvent used in wet dosing is preferably a solvent that doesn't evaporate within approximately 10 minutes application onto the cellulosic based substrate or matrix and more preferably is characterised by having a high boiling point and a low evaporation rate.

Preferably, the carrier solvent for wet dosing has a boiling point in the range of 150-265°C, and may be selected from known solvents including but not limited to normal paraffins with a boiling point range of 155-276°C, such as Norpar 12; dearomatised aliphatic hydrocarbons and their blends in the boiling point range of 150 - 265°C such as Exxsol D40, Exxsol D80 and Exxsol D100; isoparaffins in the boiling point range of 150-300°C such as Isopar G and Isopar M and glycol ethers in the boiling point range of 120-243°C.

In a preferred embodiment, the carrier solvent used in wet dosing has an evaporation rate according to ASTM D3539-87 of less than 1.0, a boiling point in the range of 150-265°C and a Snyder polarity index in the range of 0.0-4.0, preferably 0.0- 0.5.

It has been found that the release rate of the vapour active pyrethroid, preferably metofluthrin, from the cellulosic based substrate or matrix is reduced if the carrier solvent has an extremely high boiling point. For instance, a carrier solvent having a boiling point within the range of about 285-317°C (eg Exxsol D140) has a lower release rate of vapour active pyrethroid into the atmosphere than carrier solvents having a boiling point within the range of about 150-265°C (eg Exxsol D40, Exxsol D80, Exxsol D100, Isopar G , Isopar M and Norpar 12).

By dry dosing, it is meant that the vapour active pyrethroid is applied to and present on the cellulosic based substrate or matrix in the presence of a volatile carrier solvent. Preferably, the vapour active pyrethroid, preferably metofluthrin, is dissolved in a volatile solvent which distributes the vapour active pyrethroid throughout the cellulose based substrate and then rapidly evaporates into the atmosphere. Preferably, the volatile solvent evenly distributes the vapour active pyrethroid onto the cellulosic substrate or matrix and will effectively evaporate within 10 minutes of application onto the cellulosic based substrate or matrix. More preferably, the carrier solvent is characterised by having a relatively low boiling point and a high evaporation rate. Even more preferably, the volatile solvent has an evaporation rate according to ASTM D3539-87 of greater than 1.0. Preferably, the volatile solvent is selected from known solvents having a boiling point in the range 50°C to 265°C including but not limited to chlorinated hydrocarbons, methanol, ethanol, pentane, hexane, heptane, acetone and mixtures of these solvents such as ethanol/acetone (1:1 by volume).

In a preferred embodiment of the invention in which dry dosing is employed, the vapour active pyrethroid, preferably metofluthrin, is dissolved in the volatile solvent and applied to the substrate, preferably a paper substrate, that will allow the solvent to evaporate at ambient temperature.

It will be understood that solvents used in both wet and dry application of the vapour active pyrethroid to the cellulosic based substrate or matrix may be employed as carrier solvents in all aspects of the present invention that require a carrier solvent.

The term "essential oils" will be understood to mean a volatile and aromatic liquid which is isolated by a physical process from an odoriferous plant of a single botanical species. The oil bears the name of the plant from which it is derived; for example rose oil or lavender oil. These essential oils obtained from plants may be extracted by distillation, steam distillation, expression or by extraction with fats or organic solvents.

It will be understood that "aroma chemicals" are natural isolates or synthetics which have an aroma. The natural isolates are removed mechanically (eg by distillation) or chemically (eg hydrolysis or salt formation) from a natural essential oil. The isolates are further modified. For example rose and lavender oils may be distilled to produce linalool, which may then be acetylated to make linalyl acetate. Aroma chemicals are the main constituents of essential oils. These constituents are generally monoterpenes and sesquiterpenes, including but not limited to alcohols, aldehydes, ketones, esters, oxides and hydrocarbons. Preferably, the natural or synthetically derived aroma chemicals have a boiling point in the range of 120-250°C.

By "stable" insect control article according to the seventh and eighth aspects of the invention, it is meant that the active is stable in the cellulosic based substrate or matrix. More specifically, it will be understood that the insecticidal product will continue to be satisfactory in use after storage for at least 2 years according to the Manual on Development and Use of FAO and WHO Specification for Pesticides (first Edition, 2002). Preferably, the packaged insect control article according to aspects of the invention are stable articles.

In the aspects of the invention, directed to an flying insect control article, the cellulosic based substrate or matrix is attached to a protective material. In preferred embodiments of the invention, the cellulosic based substrate or matrix may be attached to a protective material. It will be understood that the meaning of the word "attached" includes but is not limited to joined, fastened, connected, annexed or affixed. Accordingly, it will be understood that the cellulosic based substrate or matrix may be attached to the protective material directly or indirectly. In a preferred embodiment of the invention, the cellulosic matrix or substrate has one or two ends that are attached to a backing board that has a protective material on one side. It will be understood that the cellulosic matrix or substrate may be attached directly to the side of the backing board with the protective material, or attached to the side of the backing board that does not have the protective material, thereby being indirectly attached to the protective material. By way of non-limiting example, it will be appreciated that the protective material may be "attached to" the cellulosic substrate or matrix by way of water and solvent based glues, hot-melt adhesives, staples, adhesive tapes and Velcro fasteners.

As discussed below, the cellulosic based substrate or matrix of the invention may be in a closed or open form. When the cellulosic based substrate or matrix is attached to a protective material and is in a closed form, the protective material preferably covers the cellulosic substrate or matrix to minimise emanation of the vapour active pyrethroid into the environment. When the cellulosic based substrate or matrix is enclosed in a packaging material as defined in aspects of the invention, the cellulosic based substrate or matrix is preferably in a closed form.

It will be appreciated that once the cellulosic based substrate or matrix is impregnated/dosed with the vapour active pyrethroid it may need to be stored for significant periods of time. It is therefore important that the packaging material or protective material is effective in minimising the release/emanation rate of vapour active pyrethroid from the cellulosic based substrate or matrix into the atmosphere. This is most successfully achieved when the packaging material or protective material is a material through which the vapour active pyrethroid will not migrate and/or be absorbed.

Preferably, the packaging/protective material used in the present invention is selected from but not limited to glass; metal foil, preferably aluminium foil, and laminates thereof; polyester, metalised polyester, heat sealable polyester film, polyester based film and formed sheet, such as amorphous PET and crystalline PET, and laminates thereof; and acrylonitrile-methyl acrylate copolymers and laminates thereof.

It has been found that when the cellulosic based substrate or matrix is wet dosed, a greater range of packaging material and protective material can be used than if the cellulosic based substrate or matrix was dry dosed. The present inventors have surprisingly found that wet dosing the cellulosic based substrate or matrix effects the movement of vapour active pyrethroid into the packaging and protective material. In particular, the inventors have found that the movement of vapour active pyrethroid into some material, such as glass; metal foil and laminates thereof; polyester, metalised polyester, heat sealable polyester film, polyester based film and formed sheet, such as amorphous PET and crystalline PET, and laminates thereof; and acrylonitrile-methyl acrylate copolymers and laminates thereof; is reduced if wet dosing rather than dry dosing is employed.

Without being bound by theory, it is thought that in wet dosing, the vapour active pyrethroid has an affinity for the solvent and is less likely to migrate from the cellulose based substrate or matrix. In contrast, it is thought that when dry dosing is employed, the vapour active pyrethroid is absorbed by the substrate or matrix and results in migration of the vapour active pyrethroid into the and through some materials.

Preferably, the packaging/protective material used in the present invention when dry dosing is employed is selected from but not limited to metal foil, glass and crystalline PET. Preferably, the packaging/protective material used in the present invention when wet dosing is employed is selected from but not limited to glass; metal foil and laminates thereof; metalised polyester, heat sealable polyester film, polyester, polyester based film and formed sheet, such as amorphous PET and crystalline PET, and laminates thereof; and acrylonitrile-methyl acrylate copolymers, and laminates thereof. Even more preferably, the packaging/protective material used is laminated metal foil.

As noted above, the emanation rate of the vapour active pyrethroid from the cellulosic based substrate or matrix is affected by a number of parameters including surface area, paper mass and size, the number of folds etc. This in turn means that products effective in killing and/or repelling insects over different time periods, such as for 12 h and 300 h, could be different.

Air movement is required in order for the pyrethroid to emanate from the substrate into the atmosphere. The rate of emanation increases with increased air flow. A minimal air flow, such as the movement of bodies, a small fan in a closed room or open windows and/or doors, is sufficient to allow a minimum emanation rate of 0.040 mg/h, and the preferred emanation rate of 0.075 mg/h.

The cellulosic based substrate or matrix of the invention containing the vapour active pyrethroid may be folded between an open form and a closed form such that they are expandable and re-closable arrangements. This means that when insect control is not required, the cellulosic based substrate or matrix may be closed and stored in a form which minimises the surface area containing the vapour active pyrethroid that is exposed to the atmosphere. Conversely, when insect control is required, the cellulosic based substrate or matrix may be expanded into an open form thereby increasing the surface area of cellulosic based substrate or matrix containing the pyrethroid that is exposed to the atmosphere allowing the pyrethroid to emanate into the atmosphere.

It will be appreciated that various configurations of the cellulosic based substrate or matrix may be adopted. These configurations include but are not limited to Japanese fans, concertina type arrangements and three dimensional structures having a plurality of cells such as honeycomb like arrangements that open and close in a concertina like fashion.

A honeycomb type arrangement may be hung to give a linear configuration, opened on a table to provide a bridge configuration or closed into a circle to give a hanging lantern configuration. It will be appreciated that in forming the circular hanging lantern other configurations prior to the circular form may be adopted. For instance, the honeycomb arrangement may be positioned in an arc of up to 360°. Preferably the cellulosic based substrate or matrix is a honeycomb arrangement made of paper.

In a preferred embodiment of the invention, the cellulosic substrate or matrix is in the form of a paper honeycomb arrangement with two ends. Preferably, the two ends of the honeycomb arrangement are attached to protective material through which the vapour active pyrethroid cannot migrate and/or be absorbed. More preferably, the two ends of the honeycomb arrangement are attached to cardboard laminated with foil, even more preferably, the cellulosic based substrate or matrix forming the honeycomb arrangement and impregnated and/or dosed with the vapour active pyrethroid is attached to the foil side of the cardboard using water based glue.

In a preferred embodiment of the invention, the cellulosic based substrate or matrix is a refill unit for a holding unit that is able to support the cellulosic based substrate or matrix. For instance, the holding unit containing the cellulosic based substrate or matrix may be hung or laid on a table.

An aspect of the invention is directed to a method of packaging cellulosic based substrate or matrix or insect control article according to the invention. It will be appreciated that the forming filling and sealing steps can be carried out according to a number of known procedures.

Brief Description of Drawings

Figure 1 is a bar graph showing % knockdown of Aedes aegypti mosquitoes in a 40 m$^3$ test chamber when exposed to various sizes of 18 gsm paper dosed with 150 mg of metofluthrin.
Figure 2 is a bar graph showing % knockdown of Aedes aegypti mosquitoes knockdown in a 40 m$^3$ test chamber when exposed to various sizes of 18 gsm paper dosed with the same concentration of metofluthrin per square metre (100 mg on A4, 50 mg on A5, 25 mg on A6, 12.5 mg on A7 and 6.25 mg on A8).
Figure 3 is a bar graph showing the affect of aging at 28°C of A4 paper dosed with 2 mg of metofluthrin on the % knockdown of Aedes aegypti mosquitoes in a 40 m$^3$ test chamber.
Figure 4 is a graph showing the combined emanation profile of 14, 20 and 25 mg of metofluthrin from bleached paper (A4, 50 gsm).
Figure 5 is a graph showing the emanation rate of metofluthrin from a honeycomb configuration at 28°C.

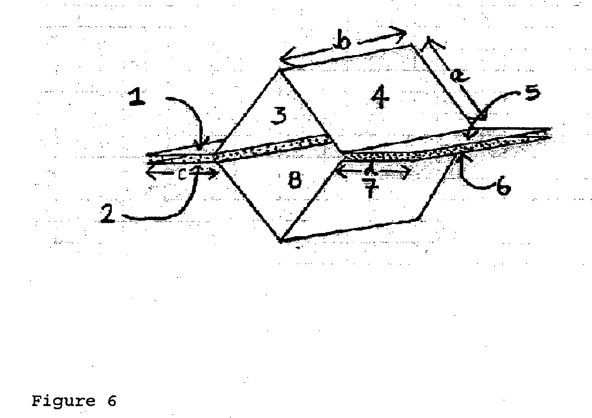

Figure 6 is a one cell honeycomb configuration with a surface area of 2bc+2bd+4ab

Modes for carrying out the Invention

In order to understand better the nature of the invention, a number of examples will now be described.

Paper size and Surface Area:

| A-series paper sizes: | Surface Area (m$^2$) |
|---|---|
| A1 - 5000 cm$^2$ - 0.5 m$^2$ | 1 m$^2$ |
| A2 - 2500 cm$^2$ - 0.25 m$^2$ | 0.5 m$^2$ |
| A3 - 1250 cm$^2$ - 0.125 m$^2$ | 0.25m$^2$ |
| A4 - 625 cm$^2$ - 0.0625 m$^2$ | 0.125m$^2$ |
| A5 - 312 cm$^2$ - 0.03125 m$^2$ | 0.0625m$^2$ |
| A6 - 156 cm$^2$ - 0.01563 m$^2$ | 0.03126m$^2$ |
| A7 - 78.1 cm$^2$ - 0.00781 m$^2$ | 0.01562m$^2$ |
| A8 - 39.1 cm$^2$ - 0.00391 m$^2$ | 0.00782m$^2$ |

B) Calculating the surface area:

**Example 1:**

Where the cellulosic based substrate or matrix is a sheet of flat A4 paper:
The surface area of the flat A4 paper is the sum of the area of both sides of the paper and is calculated as follows:

$$\text{Surface area} = \text{area of one side of paper} + \text{area of other side of paper}$$

$$\text{Surface area} = 625\ \text{cm}^2 + 625\ \text{cm}^2$$

$$\text{Surface area} = 1250\ \text{cm}^2$$

**Example 2:**

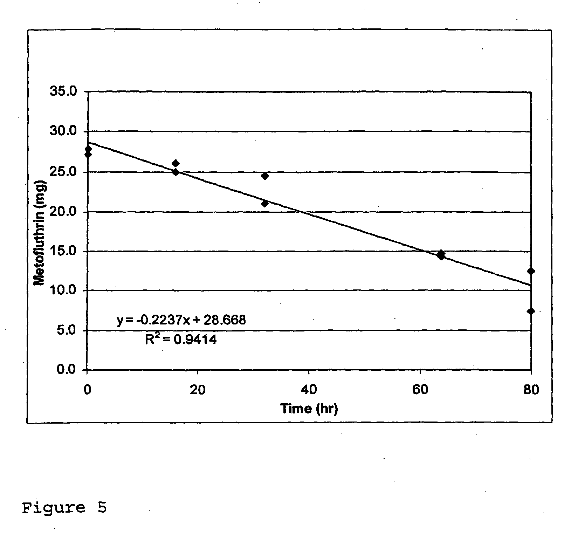

Where the cellulosic based substrate or matrix is a honeycomb configuration according to Figure 5
Figure 5 shows one cell of a honeycomb configuration. The surface area of the cell shown in Figure 5 is the sum of the area of the surfaces exposed to air. There are glue lines between surface 1 and 2 and between surface 5 and 6 which means that each portion of paper forming these surfaces only has one side exposed to air. The portions of paper forming surfaces 3, 4, 7 and 8 all have two sides exposed to air. Accordingly, the surface area for the cell shown in Figure 5 is calculated as follows:

$$\text{Surface area (SA)} = (\text{SA of surface 1}) + (\text{SA of surface 2}) + (\text{SA of surface 5}) + (\text{SA of surface 6}) + (\text{SA of surface 3}) \times 2 + (\text{SA of surface 4}) \times 2 + (\text{SA of surface 7}) \times 2 + (\text{SA of surface 8}) \times 2$$

$$\text{Surface area} = bc + bc + bd + bd + 4(ab)$$

$$Surface\ area\ =2bc + 2bd + 4ab$$

C) Knockdown Studies

The inventors have carried out a number of knockdown studies for the control of mosquitoes using paper surfaces impregnated and/or dosed with the vapour active insecticide metofluthrin. The active was applied to each paper surface as a solution in acetone/ethanol (1:1).

Tests were carried out in a 40m$^3$ test chamber. The temperature was approximately 28°C. Mixed sex Aedes aegypti mosquitoes were used, aged for 7-10 days after emergence. Up to 200 mosquitoes were introduced into the chamber for each test. Three replicates were done for each treatment. Knocked down mosquitoes were collected at the end of each assessment period and counted.

**Example 3:**

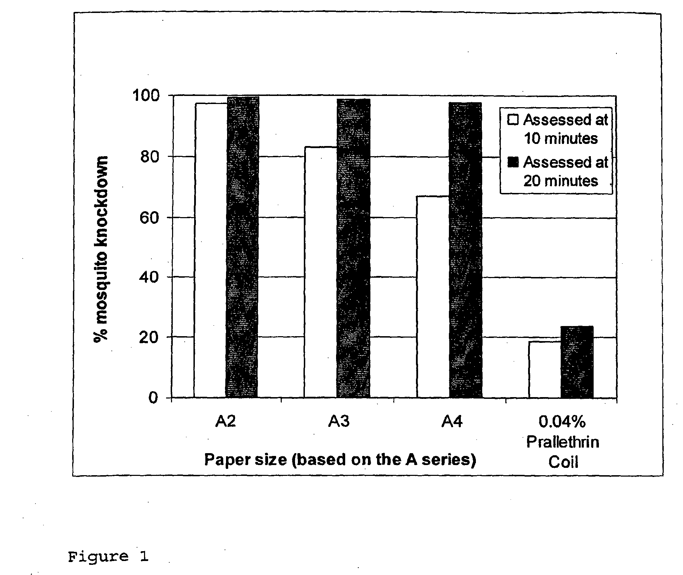

Knockdown studies against the Dengue mosquito Aedes aegypti using three surface areas a) A2, b) A3 and c) A4 of 18 gsm paper in the above test chamber were carried out. Each paper was treated with 150 mg of metofluthrin. A mosquito coil containing 0.04% Prallethrin was included as a reference control. The results are shown in Figure 1.

The results show that after 10 minutes, an increase in surface area increases product performance. After 20 minutes, all surface areas were equally effective. Further, it shows that all three paper sizes when treated with metofluthrin are more effective than the control.

**Example 4:**

Knockdown studies were carried out in the above test chamber against the Dengue mosquito Aedes aegypti using five surface areas of 18 gsm paper with five varying doses of metofluthrin a) A4, 100 mg, b) A5, 50 mg, c) A6, 25 mg, d) A7, 12.5 mg, and e) A8, 6.25 mg.

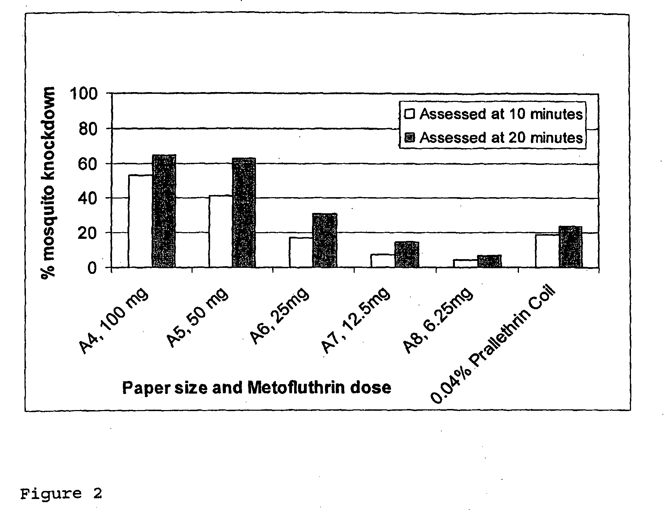

There was a common concentration of 800 mg/m$^2$ for all paper samples. A mosquito coil containing 0.04% prallethrin was included as a reference control. The treated paper was hung in the centre of the above chamber. The results are shown in Figure 2.

The results show that an increase in surface area generally increases product performance. The inventors have concluded that the performance is dependent upon the surface area.

**Example 5:**

A knockdown study against the Dengue mosquito Aedes aegypti using aged paper was conducted. The test involved treating 18 gsm paper of A4 surface area with 2 mg of metofluthrin at 28°C for up to 12 hours. The treated paper was hung in the centre of the above chamber. A mosquito coil containing 0.04% prallethrin was included in the trial as a reference control.

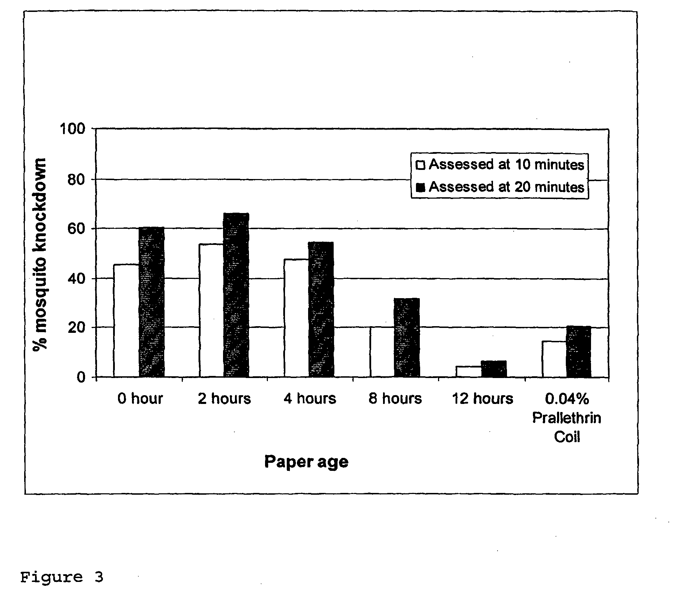

The results are shown in Figure 3.

The results show that 2 mg of metofluthrin is required on the treated substrate to achieve greater than 40% knockdown for up to 4 hours. At 4 hours, the substrate of the present invention is twice as effective as the control.

D) Studies involving Emanation Rate

**Example 6:**

A study involving dosing 50 gsm paper with different amounts of metofluthrin was made to investigate the affect on the emanation rate from this substrate.

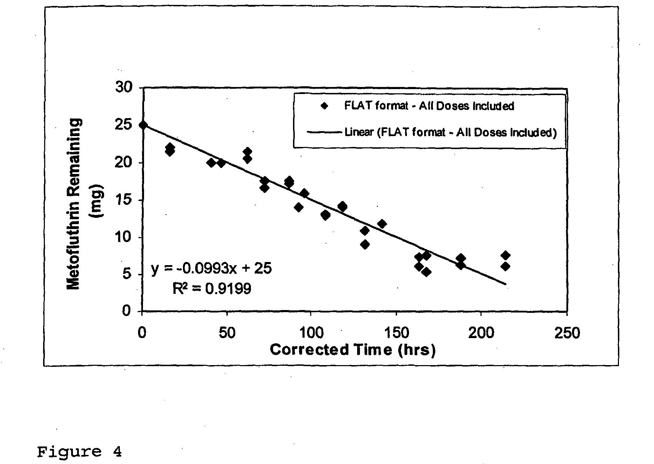

Three samples of white (A4) paper (50 gsm) each having a surface area of 1250 cm$^2$ were dosed with metofluthrin (25, 20 and 14 mg) dissolved in acetone/ethanol (1:1) using the dry dosing technique. The papers were aged in a chamber at 28°C with low air flow for up to a maximum of 214 hours. The amount of metofluthrin remaining on the paper substrate was measured from time 0 hours to 214 hours. The plot obtained for the emanation rate of metofluthrin from the 25 mg dosed samples was used to estimate the time it would take for 20 and 14 mg of metofluthrin to remain on the samples. A combined plot of the data is shown in Figure 4.

The inventors have concluded that by varying the initial amount of metofluthrin dosed on to the paper (A4) substrate in the range of 25 mg to approximately 5 mg, the emanation rate is constant. The results also demonstrate that linear release kinetics is observed for metofluthrin emanating from paper substrates. The combined plot enables an average release rate to be determined by fitting a line of best fit to the data so that the average rate of emanation to be determined.

**Example 7:**

A study involving dosing 18 gsm paper configured into a honeycomb format with an estimated surface area of 2199 cm$^2$ with metofluthrin (30 mg) was made to determine the emanation rate from this substrate.

The metofluthrin was dissolved in Norpar 12 and dosed on to the substrate using the wet dosing technique. The papers were hung and aged in a chamber at 28°C with low airflow for up to a maximum of 80 hours. The amount of metofluthrin remaining on the paper substrate was measured from time 0 hours to 80 hours. The plot obtained for the amount of metofluthrin remaining on samples as a function of time was used to calculate the release rate from this format. A plot of the data is shown in Figure 5.

The inventors have concluded that an emanation rate of 0.22 mg/hr (at 28°C) can be achieved from an 18 gsm honeycomb configuration of estimated surface area of 2199 cm$^2$. The results also demonstrate that linear release kinetics is observed for metofluthrin emanating from this format.

**Example 8:**

A study of the metofluthrin emanation rate from 30 gsm paper dosed with different solvents was made.

White (A4) paper (30 gsm) having a surface area of 1250 cm3 was dosed with metofluthrin (14 mg) prepared in a range of solvents, as listed below. The papers were aged in a chamber at 28°C with low air flow for up to a maximum of 168 hours. The amount of metofluthrin remaining on the paper substrate was measured from time 0 hours to 168 hours. The following solvents were used:

| Solvent | Chemical Description | Supplier/Source |
|---|---|---|
| Exxsol D80 | Dearomatised aliphatic hydrocarbon | Exxon Mobil (Australia) |
| Exxsol D40 | Dearomatised aliphatic hydrocarbon | Exxon Mobil (Australia) |
| Isopar G | Isoparaffins | Exxon Mobil (Australia) |
| HoTung C11-14 | Normal paraffins | Ho Tung (China) |
| Acetone/ethanol (1:1) | Ketone/alcohol mixture | Laboratory reagent |
| Exxsol D140 | Dearomatised aliphatic hydrocarbon | Exxon Mobil (Singapore) |

Table 1 summarises the observed emanation rates for each solvent. The inventors have concluded that linear release kinetics are observed for metofluthrin emanating from paper substrates and accordingly, the line of best fit was fitted to obtain the linear equation to enable the rate of emanation to be determined.

**Table 1:**

| Solvents used for dosing | wet/dry dosing | Solvent Specifications | | | Release Rate Index*** |
|---|---|---|---|---|---|
| | | Boiling Range (°C) | Evaporation Rate* | Polarity Index** | |
| Acetone/ ethanol | dry | 56-78 | 2.3-5.7 | 4.3-5.1 | 1.0 0 |
| Exxsol D80 | wet | 201-245 | 0.02 | ~0.1-0.4 | 1.4 1 |
| Exxsol D40 | wet | 155-196 | 0.15 | ~0.1-0.4 | 1.4 0 |
| Isopar G | wet | 155-175 | 0.16-0.28 | ~0.1-0.4 | 1.5 8 |
| HoTung C11-14 | wet | 185-221 | 0.04 | ~0.1-0.4 | 1.3 7 |

(continued)

| Solvents used for dosing | wet/dry dosing | Solvent Specifications | | | Release Rate Index*** |
|---|---|---|---|---|---|
| | | Boiling Range (°C) | Evaporation Rate* | Polarity Index** | |
| Exxsol D140 | wet | 285-317 | <0.01 | ~0.1-0.4 | 0.2 5 |

*Relative to n-butyl acetate = 1 (ASTM D3539-87)
** According to the Snyder polarity index for solvents (L.R.Snyder, J Chromatographic Science, 1978, 16, 223) (Reference compounds; i-octane = 0.1, n-decane = 0.4, n-hexane = 0.1)
*** The release rate index is determined from the observed release rate of metofluthrin from substrates dosed in a solvent relative to the release rate for the samples dosed with metofluthrin in acetone/ethanol (1:1 by volume).

The results indicate that papers dosed with metofluthrin in solvents with boiling ranges from 155 - 245°C show an increase in release rate compared to the acetone/ethanol control. Further, extremely high boiling point solvents such as Exxsol D140 cause a drastic reduction in the release rate. In these samples the solvent did not completely evaporate during the study.

In addition, it is observed that solvents with boiling ranges from 155 - 245°C and relatively low polarity indexes show an increased release rate compared to the sample dosed with acetone/ethanol (1:1) which has a comparatively high polarity index.

**Example 9:**

A study of the metofluthrin emanation rate from 18 gsm paper dosed with different solvents was made.

Tissue paper (18 gsm) having an effective surface area of 1250 cm$^2$ (A4) was dosed with metofluthrin (14 mg) prepared in a range of solvents. The papers were then aged in a chamber at 28°C with low airflow for up to a maximum of 168 hours. The amount of metofluthrin remaining on the paper substrate was measured from time 0 hours to 168 hours. The following solvents were used:

| Solvent | Chemical Description | Supplier/Source |
|---|---|---|
| Acetone/ ethanol (1:1 by volume) | Ketone/alcohol mixture | Laboratory reagent |
| n-pentane | n-pentane | Laboratory reagent |
| Sasol C12-13 | Normal paraffins | Schumann Sasol |
| Isopar L | Isoparaffins | Exxon Mobil (Australia) |
| Dowanol DPM | Glycol ether | Dow Chemicals (Australia) |
| Dowanol TPM | Glycol ether | Dow Chemicals (Australia) |

Table 2 illustrates the observed emanation rates for each solvent. The inventors have concluded that linear release kinetics are observed for metofluthrin emanating from paper substrates and accordingly, the line of best fit was fitted to obtain the linear equation to enable the rate of emanation to be determined. :

Table 2:

| Solvents used for dosing | dry/wet dosing | Solvent Specifications | | | Release Rate Index *** |
|---|---|---|---|---|---|
| | | Boiling Range (°C) | Evaporation Rate * | Polarity Index ** | |
| acetone/ ethanol | dry | 56 - 78 | 2.3-5.7 | 4.3-5.1 | 1.00 |
| n-pentane | dry | 36 | >33 | 0.0 | 1.50 |
| Sasol C12-13 | wet | 188 - 219 | 0.04 | ~0.1 - 0.4 | 1.63 |
| Isopar L | wet | 190 - 207 | ???? | -0.1 - 0.4 | 1.75 |
| Dowanol DPM | wet | 190 | 0.035 | >-2 | 1.20 |

(continued)

| Solvents used for dosing | dry/wet dosing | Solvent Specifications | | | Release Rate Index *** |
| --- | --- | --- | --- | --- | --- |
| | | Boiling Range (°C) | Evaporation Rate * | Polarity Index ** | |
| Dowanol TPM | wet | 243 | 0.0026 | >-2 | 1.24 |

*Relative to n-butyl acetate = 1 (ASTM D3539-87)
** According to the Snyder polarity index for solvents
(Reference compounds; i-octane = 0.1, n-decane = 0.4, n-hexane = 0.1, glycols >~2)
*** The release rate index is determined from the observed release rate of metofluthrin from substrates dosed in a solvent relative to the release rate for the samples dosed with metofluthrin in (acetone/ethanol (1:1)).

The results indicate that papers dosed with metofluthrin in solvents with boiling ranges from 188 - 243°C show an increase in release rate compared to the acetone/ethanol control. In addition, it is observed that samples dosed with solvents that have low polarity indexes show significantly increased release rates compared to the sample dosed with acetone/ethanol (1:1) which has a comparatively high polarity index.

The results show that increases in release rate may be a result of a combination of the two parameters, volatility and polarity. The results for n-pentane and the Dowanols indicate that the polarity of the solvent has a stronger influence on release rate than volatility.

**Example 10:**

The stability and packaging suitability of various materials was studied. In these studies, metofluthrin (14 mg) was applied to A4 sized 30 gsm paper substrates via wet and dry application at ambient temperature. The samples were placed in pouches prepared from the packaging materials under investigation, sealed tightly and stored at 55oC. After periods of one and two weeks, samples were removed from storage and the dosed paper substrates were measured for metofluthrin content. The packaging materials studied were glass, PVC, amorphous PET (APET), crystalline PET (CPET), aluminium foil, heat sealable polyester films, acrylonitrile methyl acrylate copolymer and PEPET. For the wet dosing of metofluthrin on the paper substrate, the metofluthrin was dissolved in Exxsol D80 or Norpar 12 and the resulting solution applied to the substrate. For dry application, the metofluthrin was dissolved in acetone/ethanol (1:1 by volume) and applied to the substrate. The solvent was then allowed to evaporate over a period of 5-10 minutes.

The following table summarises the results obtained:

| Packaging Material | WET DOSING Solvent; a = Exxsol D80 b = Norpar 12 | | DRY DOSING Solvent; c = acetone/ethanol (1:1) | |
| --- | --- | --- | --- | --- |
| | metofluthrin recovered from paper substrate (%) | | metofluthrin recovered from paper substrate (%) | |
| | 1 week at 55°C | 2 weeks at 55°C | 1 week at 55°C | 2 weeks at 55°C |
| Glass (bottle) a, c | 100 | 98 | 90 | 81 |
| PVC a, c | 73 | 44 | 64 | 46 |
| APET a, c | 95 | 100 | 87 | 82 |
| CPET a, c | 96 | 100 | 98 | 99 |
| Aluminium foil a, c | 99 | 100 | 99 | 98 |
| heat sealable polyester films a, c | - | 100 | - | 92 |
| Acrylonitrile methyl acrylate copolymer b, c | 98 | 99 | - | - |

(continued)

| Packaging Material | WET DOSING Solvent; a = Exxsol D80 b = Norpar 12 | | DRY DOSING Solvent; c = acetone/ethanol (1:1) | |
|---|---|---|---|---|
| | metofluthrin recovered from paper substrate (%) | | metofluthrin recovered from paper substrate (%) | |
| | 1 week at 55°C | 2 weeks at 55°C | 1 week at 55°C | 2 weeks at 55°C |
| PEPET b, c | 78 | 77 | - | - |
| Note 1: The glass bottle included a PET lid. The lid has been attributed to the loss of metofluthrin observed from the stability experiment when using the dry dosing method. Note 2: It should be recognised that an acceptable level of uncertainty for these measurements would be $\pm$ 5 % | | | | |

The results indicate that packing the product wet limits the movement of the active into the packaging. Further, APET, CPET, glass, heat sealable polyester film, acrylonitrile methyl acrylate copolymer and aluminium foil all appear suitable packaging for wet packaged product. If the product is to be packed dry then CPET and aluminium foil appear to be better packaging options.

**Claims**

1. A cellulosic based substrate or matrix for controlling flying insects, the cellulosic based substrate or matrix impregnated and/or dosed with an insecticidally effective amount of a vapour active pyrethroid in a carrier solvent or combination of carrier solvents, wherein the carrier solvent(s) has an evaporation rate according to ASTM D3539-87 of less than 1.0;
wherein the carrier solvent(s) is/are selected from carrier solvents having a boiling point in the range 50°C to 265°C, normal paraffins with a boiling point range of 155°C to 276°C, dearomatised aliphatic hydrocarbons and their blends in the boiling point range of 33°C to 265°C, and/or isoparaffins in the boiling point range of 150°C to 300°C;
and the carrier solvent(s) has a Snyder polarity index in the range of 0.0-4.0, such that the vapour active pyrethroid is emanated into the environment at a rate of at least 0.040 mg/h.

2. The cellulosic based substrate or matrix according to claim 1 wherein the vapour active pyrethroid is selected from the group consisting of metofluthrin, transfluthrin, empenthrin, methothrin, tefluthrin, and fenfluthrin or mixtures thereof.

3. The cellulosic based substrate or matrix according to claim 2 wherein the cellulosic based substrate or matrix has a surface area in the range of 50-5000 cm$^2$ and the vapour active pyrethroid is present in an amount of 2.0-3000 mg/m$^2$.

4. The cellulosic based substrate or matrix according to any one of claims 1 to 3, wherein the solvent is selected from the group consisting of normal paraffins with a boiling point range of 155-276°C, dearomatised aliphatic hydrocarbons and their blends in the boiling point range of 150-265°C, isoparaffins in the boiling point range of 150-300°C and glycol ethers in the boiling point range of 120-243°C.

5. The cellulosic based substrate or matrix according to any one of claims 1 to 4 wherein the carrier solvent has a boiling point in the range of 150-265°C.

6. The cellulosic based substrate or matrix according to any one of claims 1 to 5, wherein the vapour active pyrethroid is metofluthrin.

7. The cellulosic based substrate or matrix according to any one of claims 1 to 6, wherein the vapour active pyrethroid is emanated into the environment with non-augmented air movement at a rate of at least 0.040 mg/h at a temperature in the range of 18-40°C.

8. The cellulosic based substrate or matrix according to any one of claims 1 to 7, wherein the vapour active pyrethroid is emanated into the environment at a rate of at least 0.075 mg/h, at a temperature in the range of 21-35°C.

9. The cellulosic based substrate or matrix according to any one of claims 1 to 8, wherein the cellulosic based substrate or matrix is in the form of a honeycomb arrangement.

10. The cellulosic based substrate or matrix according to claim 9, wherein the honeycomb arrangement has two ends that are attached to a protective material into which the vapour active pyrethroid cannot migrate and/or be absorbed, and wherein the honeycomb arrangement has an open form that allows emanation of the vapour active pyrethroid into the atmosphere and a closed form which inhibits migration and/or absorption of the vapour active pyrethroid into the atmosphere.

11. The cellulosic based substrate or matrix according to any one of claims 1 to 10 wherein the flying insects are mosquitoes.

12. The cellulosic based substrate or matrix according to any one of claims 1 to 11 wherein the carrier solvent has a Snyder polarity index of less than 4.0.

13. The cellulosic based substrate or matrix according to claim 12 wherein the carrier solvent has a Snyder polarity index of less than 0.5.

14. A flying insect control article comprising a cellulosic based substrate or matrix as claimed in any of claims 1 to 13.

15. The flying insect control article of claim 14 further comprising:

   a protective material that is attached to the cellulosic based substrate or matrix intro which protective material the vapour active pyrethroid does not migrate and/or is not absorbed;
   wherein the cellulosic based substrate and/or matrix exists in a closed and open form such that when in the open form the pyrethroid is able to emanate from the substrate into the environment and when in the closed form the protective material covers the substrate or matrix to minimise emanation of the pyrethroid into the environment.

16. The flying insect control article of claim 14, wherein the flying insect control article is packaged and comprises:

   a packaging material enclosing the cellulosic based substrate or matrix into which material the vapour active pyrethroid does not migrate and/or is not absorbed;
   wherein when the packaging material enclosing the cellulosic based substrate or matrix is removed from around the cellulosic based substrate or matrix, the vapour active pyrethroid is free to emanate from the cellulosic based substrate or matrix exposed to the environment to control flying insects.

17. The flying insect control article of claim 14,
   wherein the flying insect control article is a stable flying insect control article and is enclosed by a packaging material;
   wherein the cellulosic based substrate or matrix is wet with a solution of the insecticidally effective amount of the vapour active pyrethroid and the vapour active pyrethroid emanates from the cellulosic substrate or matrix into the environment at a rate of at least 0.040 mg/h but does not migrate and/or is not absorbed into the packaging material.

18. The flying insect control article according to any one of claims 15 to 17, wherein the protective material and packaging material is selected from the group including metalised polyester, heat sealed polyester films, polyester based film and formed sheet, acrylonitrile-methyl acrylate copolymers and laminates thereof, metal foil and laminates thereof, or is glass.

19. A method for controlling flying insects comprising the steps of:

   a) providing the cellulosic based substrate or matrix according to any one of claims 1 to 13 or the flying insect control article according to any one of claims 14 to 18;
   b) exposing the cellulosic based substrate or matrix in an environment with non-augmented air movement; and
   c) allowing the vapour active pyrethroid impregnated within and/or dosed on the cellulosic based substrate or matrix to passively emanate into the air.

**20.** A method of packaging a cellulosic based substrate or matrix according to any one of claims 1 to 13 or a flying insect control article according to any one of claims 14 to 18 comprising the steps of:

a) providing a packaging material through which the vapour active pyrethroid does not migrate and/or is not absorbed;
b) forming a pouch with the packaging material;
c) filling the pouch with the cellulosic based substrate or matrix or insect control article; and
d) sealing the pouch.

**Patentansprüche**

**1.** Substrat oder Matrix auf Cellulosebasis zum Bekämpfen von Fluginsekten,
wobei das Substrat oder die Matrix auf Cellulosebasis mit einer insektizid wirksamen Menge eines als Dampf wirkenden Pyrethroidwirkstoffs in einem Trägerlösungsmittel oder einer Kombination von Trägerlösungsmitteln imprägniert und/oder dosiert ist, wobei das (die) Trägerlösungsmittel eine Verdampfungsgeschwindigkeit nach ASTM D 3539-87 von weniger als 1,0 aufweist (aufweisen);
wobei das (die) Trägerlösungsmittel ausgewählt ist (sind) aus Trägerlösungsmitteln mit einem Siedepunkt im Bereich von 50°C bis 265°C, normalen Paraffinen mit einem Siedepunkt im Bereich von 155°C bis 276°C, entaromatisierten aliphatischen Kohlenwasserstoffen und deren Mischungen im Siedepunktbereich von 33°C bis 265°C und/oder Isoparaffinen im Siedepunktbereich von 150°C bis 300°C;
und das (die) Trägerlösungsmittel einen Snyder-Polaritätsindex im Bereich von 0,0-4,0 aufweist (aufweisen), sodass der als Dampf wirkende Pyrethroidwirkstoff mit einer Geschwindigkeit von mindestens 0,040 mg/Std. in die Umgebung ausgeströmt wird.

**2.** Substrat oder Matrix auf Cellulosebasis nach Anspruch 1, wobei der als Dampf wirkende Pyrethroidwirkstoff ausgewählt ist aus der Gruppe, bestehend aus Metofluthrin, Transfluthrin, Empenththrin, Metothrin, Tefluthrin und Fenfluthrin oder Gemischen davon.

**3.** Substrat oder Matrix auf Cellulosebasis nach Anspruch 2, wobei das Substrat oder die Matrix auf Cellulosebasis einen Oberflächenbereich im Bereich von 50-5000 cm$^2$ aufweist und der als Dampf wirkende Pyrethroidwirkstoff in einer Menge von 2,0-3000 mg/m$^2$ vorliegt.

**4.** Substrat oder Matrix auf Cellulosebasis nach einem der Ansprüche 1 bis 3,
wobei das Lösungsmittel ausgewählt ist aus der Gruppe, bestehend aus normalen Paraffinen mit einem Siedepunktbereich von 155-276, entaromatisierten aliphatischen Kohlenwasserstoffen und deren Mischungen im Siedepunktbereich von 150-265°C, Isoparaffinen im Siedepunktbereich von 150-300°C und Glycolethern im Siedepunktbereich von 120-243°C.

**5.** Substrat oder Matrix auf Cellulosebasis nach einem der Ansprüche 1 bis 4,
wobei das Trägerlösungsmittel einen Siedepunkt im Bereich von 150-265°C aufweist.

**6.** Substrat oder Matrix auf Cellulosebasis nach einem der Ansprüche 1 bis 5,
wobei es sich bei dem als Dampf wirkenden Pyrethroidwirkstoff um Metofluthrin handelt

**7.** Substrat oder Matrix auf Cellulosebasis nach einem der Ansprüche 1 bis 6,
wobei der als Dampf wirkende Pyrethroidwirkstoff mit einer nichtgesteigerten Luftbewegung mit einer Geschwindigkeit von mindestens 0,040 mg/Std. bei einer Temperatur im Bereich von 18-24°C in die Umgebung ausgeströmt wird.

**8.** Substrat oder Matrix auf Cellulosebasis nach einem der Ansprüche 1 bis 7,
wobei der als Dampf wirkende Pyrethroidwirkstoff mit einer Geschwindigkeit von mindestens 0,075 mg/Std. bei einer Temperatur im Bereich von 21-35°C in die Umgebung ausgeströmt wird.

**9.** Substrat oder Matrix auf Cellulosebasis nach einem der Ansprüche 1 bis 8,
wobei das Substrat oder die Matrix auf Cellulosebasis in der Form einer Honigwabenanordnung vorliegt.

**10.** Substrat oder Matrix auf Cellulosebasis nach Anspruch 9, wobei die Honigwabenanordnung zwei Enden aufweist, die an ein Schutzmaterial angebracht sind, in welches der als Dampf wirkende Pyrethroidwirkstoff nicht migriert und/oder absorbiert wird, und wobei die Honigwabenanordnung eine offene Form, die ein Ausströmen des als Dampf wirkenden Pyrethroidwirkstoffs in die Atmosphäre ermöglicht, und eine geschlossene Form, die eine Migration und/oder Absorption des als Dampf wirkenden Pyrethroidwirkstoffs in die/der Atmosphäre hemmt, aufweist.

11. Substrat oder Matrix auf Cellulosebasis nach einem der Ansprüche 1 bis 10, wobei es sich bei den Fluginsekten um Mücken handelt.

12. Substrat oder Matrix auf Cellulosebasis nach einem der Ansprüche 1 bis 11, wobei das Trägerlösungsmittel einen Snyder-Polaritätsindex von weniger als 4,0 aufweist.

13. Substrat oder Matrix auf Cellulosebasis nach Anspruch 12, wobei das Trägerlösungsmittel einen Snyder-Polaritätsindex von weniger als 0,5 aufweist.

14. Gegenstand zur Bekämpfung von Fluginsekten, umfassend ein Substrat oder eine Matrix auf Cellulosebasis wie in einem der Ansprüche 1 bis 13 beansprucht.

15. Gegenstand zur Bekämpfung von Fluginsekten nach Anspruch 14, ferner umfassend:

ein Schutzmaterial, das an dem Substrat oder der Matrix auf Cellulosebasis angebracht ist, wobei der als Dampf wirkende Pyrethroidwirkstoff in das Schutzmaterial nicht migriert und/oder darin nicht absorbiert wird; wobei das Substrat und/oder die Matrix auf Cellulosebasis in einer geschlossenen und offenen Form vorliegt, sodass das Pyrethroid in der offenen Form aus dem Substrat in die Umgebung ausströmen kann und das Schutzmaterial in der geschlossenen Form das Substrat oder die Matrix abdeckt, um ein Ausströmen des Pyrethroids in die Umgebung zu minimieren.

16. Gegenstand zur Bekämpfung von Fluginsekten nach Anspruch 14, wobei der Gegenstand zur Bekämpfung von Fluginsekten verpackt ist und Folgendes umfasst:

ein Verpackungsmaterial, das das Substrat oder die Matrix auf Cellulosebasis, einhüllt, wobei der als Dampf wirkende Pyrethroidwirkstoff in das Material nicht migriert und/oder darin nicht absorbiert wird; wobei der als Dampf wirkende Pyrethroidwirkstoff beim Entfernen des Verpackungsmaterials von dem Substrat oder der Matrix auf Cellulosebasis frei zum Ausströmen von dem der Umgebung ausgesetzten Substrat oder der Matrix auf Cellulosebasis ist, um Fluginsekten zu bekämpfen.

17. Gegenstand zur Bekämpfung von Fluginsekten nach Anspruch 14, wobei der Gegenstand zur Bekämpfung von Fluginsekten ein stabiler Gegenstand zur Bekämpfung von Fluginsekten ist und von einem Verpackungsmaterial eingehüllt ist; wobei das Substrat oder die Matrix auf Cellulosebasis mit einer Lösung der insektizid wirksamen Menge des als Dampf wirkenden Pyrethroidwirkstoffs benetzt ist und der als Dampf wirkende Pyrethroidwirkstoff von dem Cellulosesubstrat oder der Cellulosematrix mit einer Geschwindigkeit von mindestens 0,040 mg/Std. ausströmt, aber nicht in das Verpakkungsmaterial migriert und/oder darin absorbiert wird.

18. Gegenstand zur Bekämpfung von Fluginsekten nach einem der Ansprüche 15 bis 17, wobei das Schutzmaterial und das Verpackungsmaterial ausgewählt ist aus der Gruppe, einschließend metallisierten Polyester, heißversiegelten Polyesterfolien, Folie und Formlagenmaterial auf Polyesterbasis, Acrylnitril-Methylacrylat-Copolymeren und Laminaten davon, Metallfolien und Laminaten davon, oder Glas ist.

19. Verfahren zum Bekämpfen von Fluginsekten, umfassend die Schritte:

a) Bereitstellen des Substrats oder der Matrix auf Cellulosebasis nach einem der Ansprüche 1 bis 13 oder des Gegenstands zur Bekämpfung von Fluginsekten nach einem der Ansprüche 14 bis 18; b) Aussetzen des Substrats oder der Matrix auf Cellulosebasis einer Umgebung mit nicht-gesteigerter Luftbewegung; c) Ermöglichen, dass der als Dampf wirkende Pyrethroidwirkstoff in das Substrat oder die Matrix auf Cellulosebasis imprägniert und/oder dosiert wird, um passiv in die Luft auszuströmen.

20. Verfahren zum Verpacken eines Substrats oder einer Matrix auf Cellulosebasis nach einem der Ansprüche 1 bis 13 oder eines Gegenstands zur Bekämpfung von Fluginsekten nach einem der Ansprüche 14 bis 18, umfassend die Schritte:

a) Bereitstellen eines Verpackungsmaterials, durch welches der als Dampf wirkende Pyrethroidwirkstoff nicht migriert und/oder nicht absorbiert wird;
b) Formen eines Beutels mit dem Verpackungsmaterial;
c) Füllen des Beutels mit dem Substrat oder der Matrix auf Cellulosebasis oder dem Gegenstand zur Bekämpfung von Insekten; und
d) Versiegeln des Beutels.

**Revendications**

1. Substrat ou matrice à base cellulosique pour combattre les insectes volants, le substrat ou la matrice à base cellulosique étant imprégné et/ou traité avec une quantité à effet insecticide d'un pyréthroïde à vapeur active dans un solvant vecteur ou une association de solvants vecteurs, dans lequel le ou les solvants vecteurs ont une vitesse d'évaporation selon ASTM D3539-87 inférieure à 1,0 ;
dans lequel le ou les solvants vecteurs est/sont choisi(s) parmi les solvants vecteurs ayant un point d'ébullition compris dans l'intervalle de 50°C à 265°C, les paraffines normales ayant un intervalle de point d'ébullition de 155°C à 276°C, les hydrocarbures aliphatiques désaromatisés et leurs mélanges entrant dans l'intervalle de point d'ébullition de 33°C à 265°C et/ou les isoparaffines entrant dans l'intervalle de point d'ébullition de 150°C à 300°C ;
et le ou les solvants vecteurs ont un indice de polarité Snyder compris dans l'intervalle de 0,0 à 4,0, en sorte que le pyréthroïde à vapeur active soit dégagé dans l'environnement à une vitesse d'au moins 0,040 mg/h.

2. Substrat ou matrice à base cellulosique selon la revendication 1, dans lequel le pyréthroïde à vapeur active est choisi dans le groupe formé par la métofluthrine, la transfluthrine, l'empenthrine, la méthothrine, la téfluthrine et la fenfluthrine ou leurs mélanges.

3. Substrat ou matrice à base cellulosique selon la revendication 2, dans lequel le substrat ou la matrice à base cellulosique a une aire comprise dans l'intervalle de 50 à 5000 cm$^2$ et le pyréthroïde à vapeur active est présent en une quantité de 2,0 à 3000 mg/m$^2$.

4. Substrat ou matrice à base cellulosique selon l'une quelconque des revendications 1 à 3, dans lequel le solvant est choisi dans le groupe formé par les paraffines normales ayant un intervalle de point d'ébullition de 155 à 276°C, les hydrocarbures aliphatiques désaromatisés et leurs mélanges entrant dans l'intervalle de point d'ébullition de 150 à 265°C, les isoparaffines entrant dans l'intervalle de point d'ébullition de 150 à 300°C et les éthers de glycol entrant dans l'intervalle de point d'ébullition de 120 à 243°C.

5. Substrat ou matrice à base cellulosique selon l'une quelconque des revendications 1 à 4, dans lequel le solvant vecteur a un point d'ébullition compris dans l'intervalle de 150 à 265°C.

6. Substrat ou matrice à base cellulosique selon l'une quelconque des revendications 1 à 5, dans lequel le pyréthroïde à vapeur active est la métofluthrine.

7. Substrat ou matrice à base cellulosique selon l'une quelconque des revendications 1 à 6, dans lequel le pyréthroïde à vapeur active est dégagé dans l'environnement avec un déplacement d'air non intensifié à une vitesse d'au moins 0,040 mg/h à une température comprise dans l'intervalle de 18 à 40°C.

8. Substrat ou matrice à base cellulosique selon l'une quelconque des revendications 1 à 7, dans lequel le pyréthroïde à vapeur active est dégagé dans l'environnement à une vitesse d'au moins 0,075 mg/h à une température comprise dans l'intervalle de 21 à 35°C.

9. Substrat ou matrice à base cellulosique selon l'une quelconque des revendications 1 à 8, dans lequel le substrat ou la matrice à base cellulosique est sous la forme d'une structure en nid-d'abeilles.

10. Substrat ou matrice à base cellulosique selon la revendication 9, dans lequel la structure en nid-d'abeilles présente deux extrémités qui sont attachées à un matériau protecteur dans lequel le pyréthroïde à vapeur active ne peut migrer et/ou être absorbé, et dans lequel la structure en nid-d'abeilles présente une forme ouverte qui permet le dégagement du pyréthroïde à vapeur active dans l'atmosphère et une forme fermée qui inhibe la migration et/ou l'absorption du pyréthroïde à vapeur active dans l'atmosphère.

11. Substrat ou matrice à base cellulosique selon l'une quelconque des revendications 1 à 10, dans lequel les insectes volants sont des moustiques.

12. Substrat ou matrice à base cellulosique selon l'une quelconque des revendications 1 à 11, dans lequel le solvant vecteur a un indice de polarité Snyder inférieur à 4,0.

13. Substrat ou matrice à base cellulosique selon la revendication 12, dans lequel le solvant vecteur a un indice de polarité Snyder inférieur à 0,5.

14. Article pour combattre les insectes volants, comprenant un substrat ou une matrice à base cellulosique tel que revendiqué dans l'une quelconque des revendications 1 à 13.

15. Article pour combattre les insectes volants selon la revendication 14, comprenant de plus :

   un matériau protecteur qui est attaché au substrat ou à la matrice à base cellulosique, le pyréthroïde à vapeur active ne migrant pas et/ou n'étant pas absorbé dans ce matériau protecteur ;
   dans lequel le substrat et/ou la matrice à base cellulosique existe sous une forme fermée et une forme ouverte de sorte que, lorsqu'il est sous la forme ouverte, le pyréthroïde peut se dégager dans l'environnement à partir du substrat et, lorsqu'il est sous la forme fermée, le matériau protecteur couvre le substrat ou la matrice de façon à minimiser le dégagement du pyréthroïde dans l'environnement.

16. Article pour combattre les insectes volants selon la revendication 14, dans lequel l'article pour combattre les insectes volants est emballé et comprend :

   un matériau d'emballage enveloppant le substrat ou la matrice à base cellulosique, dans lequel le pyréthroïde à vapeur active ne migre pas et/ou n'est pas absorbé ;
   dans lequel, lorsque le matériau d'emballage enveloppant le substrat ou la matrice à base cellulosique est retiré du pourtour du substrat ou de la matrice à base cellulosique, le pyréthroïde à vapeur active est libre de se dégager du substrat ou de la matrice à base cellulosique exposé à l'environnement pour combattre les insectes volants.

17. Article pour combattre les insectes volants selon la revendication 14, dans lequel l'article pour combattre les insectes volants est un article pour combattre les insectes volants stable et est enveloppé par un matériau d'emballage ; dans lequel le substrat ou la matrice à base cellulosique est humecté avec une solution de la quantité à effet insecticide du pyréthroïde à vapeur active et le pyréthroïde à vapeur active se dégage dans l'environnement à partir du substrat ou de la matrice à base cellulosique à une vitesse d'au moins 0,040 mg/h, mais ne migre pas et/ou n'est pas absorbé dans le matériau d'emballage.

18. Article pour combattre les insectes volants selon l'une quelconque des revendications 15 à 17, dans lequel le matériau protecteur et le matériau d'emballage sont choisis dans le groupe formé par du polyester métallisé, des films de polyester thermoscellés, un film et une feuille conformée à base de polyester, des copolymères acrylonitrile-acrylate de méthyle et des stratifiés de ceux-ci, une feuille métallique et des stratifiés de celle-ci, ou sont du verre.

19. Procédé pour combattre les insectes volants, comprenant les étapes consistant à :

   a) fournir le substrat ou la matrice à base cellulosique selon l'une quelconque des revendications 1 à 13 ou l'article pour combattre les insectes volants selon l'une quelconque des revendications 14 à 18 ;
   b) exposer le substrat ou la matrice à base cellulosique à un environnement avec un déplacement d'air non intensifié ; et
   c) laisser le pyréthroïde à vapeur active avec lequel est imprégné et/ou traité le substrat ou la matrice à base cellulosique se dégager passivement dans l'air.

20. Procédé d'emballage d'un substrat ou d'une matrice à base cellulosique selon l'une quelconque des revendications 1 à 13 ou d'un article pour combattre les insectes volants selon l'une quelconque des revendications 14 à 18, comprenant les étapes consistant à :

a) préparer un matériau d'emballage à travers lequel le pyréthroïde à vapeur active ne migre pas et/ou n'est pas absorbé ;

b) former une poche avec le matériau d'emballage ;

c) remplir la poche avec le substrat ou la matrice à base cellulosique ou l'article pour combattre les insectes ; et

d) sceller la poche.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0792581 A
- FR 2639187
- FR 2767028
- FR 2785147
- EP 1216615 A
- EP 0962139 A

### Non-patent literature cited in the description

- **L.R.SNYDER.** *J Chromatographic Science,* 1978, vol. 16, 223
- Manual on Development and Use of FAO and WHO Specification for Pesticides. 2002